# EUROPEAN PATENT APPLICATION

(11) **EP 1 845 742 A1**
(43) Date of publication of application: **17.10.2007**
(21) Application number: 06712532.8
(22) Date of filing: 27.01.2006
(51) Int. Cl.: H04Q 7/36, H04B 7/26, H04L 1/00, H04Q 7/38

(54) **BASE STATION APPARATUS AND RESOURCE ASSIGNING METHOD**

(30) Priority: 02.02.2005 JP 2005026738
(71) Applicant: Matsushita Electric Industrial Co., Ltd., Kadoma-shi, Osaka 571-8501 (JP)
(72) Inventor: SUMASU, Atsushi Matsushita Electric Ind. Co.Ltd, Osaka-shi, Osaka 540-6207 (JP); HAGA, Hiroki Matsushita Electric Ind. Co.Ltd, Osaka-shi, Osaka 540-6207 (JP); HOSHINO, Masayuki Matsushita Electric Ind. Co.Ltd, Osaka-shi, Osaka 540-6207 (JP)
(74) Representative: Grünecker, Kinkeldey, Stockmair & Schwanhäusser Anwaltssozietät
(86) International application number: PCT/JP2006/301366
(87) International publication number: WO 2006/082761

(57) **Abstract**

A base station apparatus that selects an optimum MCS level so as to improve system throughput. In this base station apparatus, a terminal rank detecting part (108) detects terminal rank information included in received data. An MCS table selecting part (109) selects, based on the rank of a communication terminal apparatus, an MCS table to be used for a scheduling. A scheduling part (151) stores a plurality of MCS tables indicative of a range of SINRs to which MSC levels are assigned; assigns, based on an MCS table selected by the MCS table selecting part (109) and also based on line quality information, a communication terminal apparatus to which the data is to be transmitted; and decides a modulation scheme and an encoding rate for the data to be transmitted to the assigned communication terminal apparatus.

## Description

### Technical Field

The present invention relates to a base station apparatus and a resource allocation method used in a radio transmission system.

### Background Art

In HSDPA (High Speed Downlink Packet Access) standardized of 3GPP, a high throughput is implemented by applying the scheduling technique and adaptive modulation technique. The scheduling technique allocates, at a base station apparatus, a user channel based on channel quality (for example, SINR (Signal to Interference and Noise Ratio)) measured by communication terminal apparatuses. The adaptive modulation technique determines, at a base station apparatus, a combination of a modulation scheme and error correction coding rate (referred to as "MCS level") for transmission data per communication terminal apparatus based on reception quality measured by communication terminal apparatuses.

The base station apparatus, which performs scheduling, compares channel quality measured by communication terminal apparatuses, allocates a user channel to, for example, the communication terminal apparatus having highest channel quality, modulates transmission data at the MCS level corresponding to highest channel quality and transmits modulated transmission data.
Non-Patent Document 1: 3GPP TR25.858 V5.0.0 (2002-03)
Non-Patent Document 1: 3GPP TS25.214 V5.8.0 (2004-03)

### Disclosure of Invention

### Problems to be Solved by the Invention

However, in the above conventional method, the difference of the specification of the reliability of SINR measurement per communication terminal apparatus is not taken into consideration, therefore it is likely to fail selecting the optimum MCS level in the communication terminal apparatus.

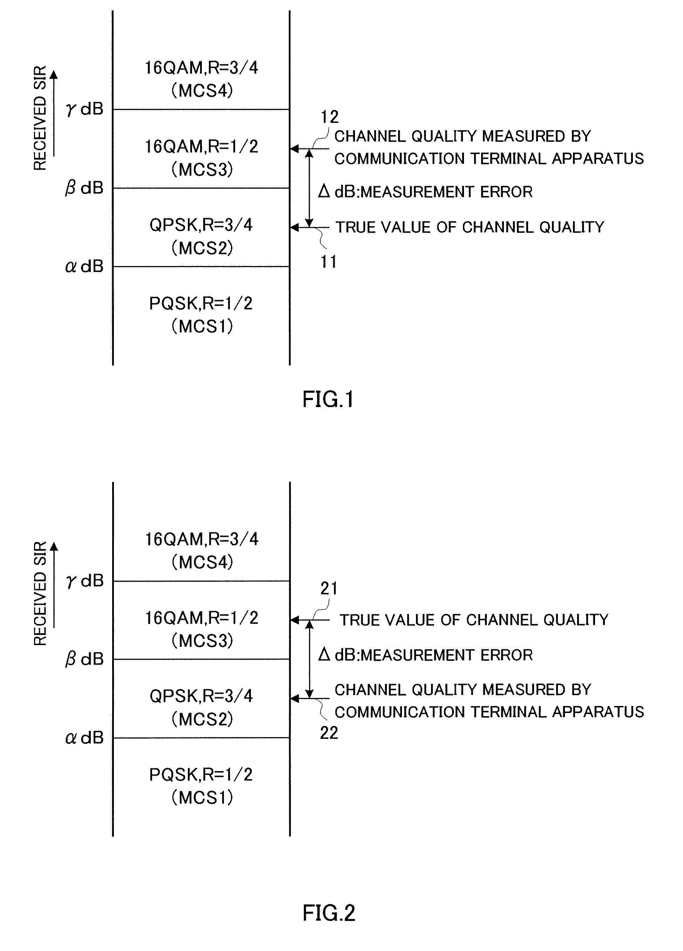

For example, in FIG.1, even though the real SINR (true value of channel quality) is point 11 there is a case where the SINR becomes point 12 as a result of measurement due to an SINR measurement error. In this case, although the base station apparatus, according to the conventional method, should select MCS level 2, the base station apparatus selects MCS level 3. Therefore, the communication terminal apparatus fails to correctly demodulate the received signal.

Meanwhile, in FIG.2, even though the real SINR (true value of channel quality) is point 21, there is a case where the SINR becomes point 12 as a result of measurement due to an SINR measurement error. In this case, although the base station apparatus, according to the conventional method, should select MCS level 3, the base station apparatus selects MCS level 2. Therefore, the base station apparatus transmits a signal having an excessive margin to a communication terminal apparatus, and the throughput is decreased.

It is an object of the present invention to provide a base station apparatus and a resource allocation method that enable selecting the optimum MCS level and improving system throughput.

### Means for Solving the Problem

The base station apparatus of the present invention employs a configuration including: a modulation and coding scheme table selecting section that selects a modulation and coding scheme table used in scheduling based on a rank of a communication terminal apparatus; and a scheduling section that determines a modulation and coding scheme level based on the modulation and coding scheme table selected by the modulation and coding scheme table selecting section and channel quality measured by the communication terminal apparatus.

The resource allocation method of the present invention employs a method including: selecting a modulation and coding scheme table used in scheduling based on a rank of a communication terminal apparatus; updating the rank and reselecting a modulation and coding scheme table; and determining a modulation and coding scheme level based on the reselected modulation and coding scheme table and channel quality measured by the communication terminal apparatus.

### Advantageous Effect of the Invention

According to the present invention, by selecting a MCS table taking into consideration, for example, a rank of a communication terminal apparatus and determining a MCS level based on channel quality using the selected MCS table, it is possible to determine the optimum MCS level and improve system throughput.

### Brief Description of Drawings

FIG.1 illustrates an example of a conventional method for selecting a MCS level;
FIG.2 illustrates an example of a conventional method for selecting a MCS level;
FIG.3 is a block diagram showing a configuration of the base station apparatus according to Embodiment 1 of the present invention;
FIG.4 is a block diagram showing a configuration of the communication terminal apparatus according to the above embodiment;
FIG.5 is a sequence diagram showing steps of communication between the base station apparatus and communication terminal apparatus according to the above embodiment;
FIG.6 shows MCS tables stored in the base station apparatus according to the above embodiment;
FIG.7 is a block diagram showing a configuration of the base station apparatus according to Embodiment 2 of the present invention;
FIG.8 shows a table providing relationship between ranks and averaging intervals stored in the base station apparatus according to the above embodiment;
FIG.9 is a block diagram showing a configuration of the base station apparatus according to Embodiment 3 of the present invention;
FIG.10 is a block diagram showing a configuration of the communication terminal apparatus according to the above embodiment;
FIG.11 is a block diagram showing a configuration of the base station apparatus according to Embodiment 4 of the present invention;
FIG.12 is a block diagram showing a configuration of the communication terminal apparatus according to the above embodiment;
FIG.13 shows MCS tables stored in the base station apparatus according to Embodiment 5 of the present invention; and
FIG.14 shows MCS tables stored in the base station apparatus according to the above embodiment.

### Best Mode for Carrying Out the Invention

An embodiment of the present invention will be described in detail with reference to drawings.

### (Embodiment 1)

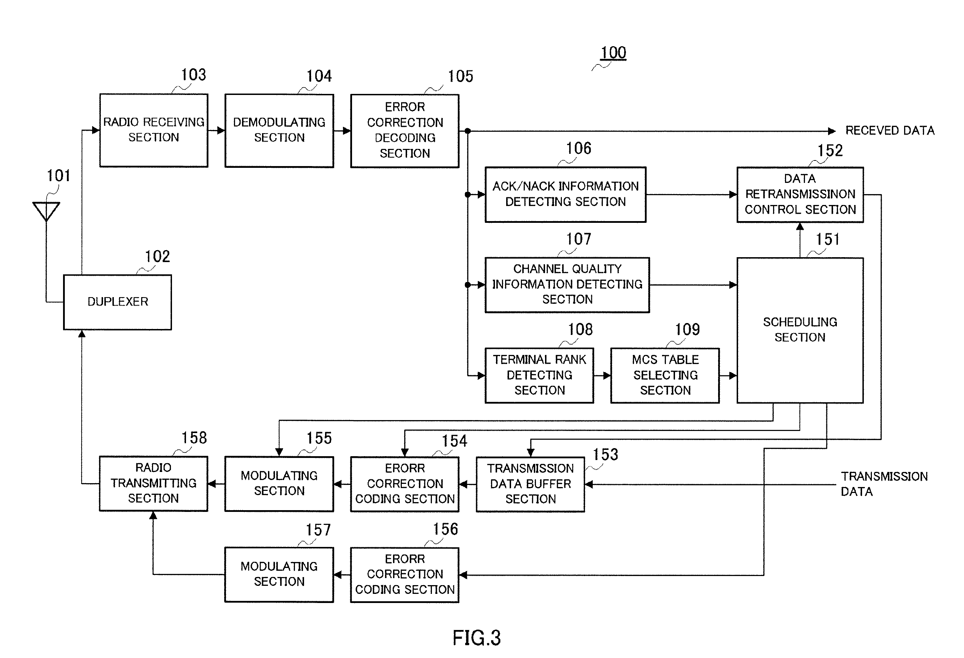

The configuration of the base station apparatus according to Embodiment 1 of the present invention will be described with reference to the block diagram of FIG. 3. Base station apparatus 100 of FIG.3 carries out wireless communication with a plurality of communication terminal apparatuses at the same time. The signal transmitted from each communication terminal apparatus to base station apparatus 100 includes channel quality information indicating measured channel quality, ACK/NACK information indicating error detection processing results, and rank information indicating the specification of each communication terminal apparatus by rank. ACK information indicates that no error is detected and NACK information indicates that an error is detected. The specification of a communication terminal apparatus is indicated in three ranks of A, B and C, in descending order. The specification of a communication terminal apparatus includes, for example, the reliability of channel quality measurement, the number of iterative decoding and the reliability of frequency control.

Duplexer 102 outputs a signal received at antenna 101 to radio receiving section 103. Further, duplexer 102 carries out, from antenna 101, radio transmission of the signal outputted from radio transmitting section 158.

Radio receiving section 103 converts the received signal of a radio frequency outputted from duplexer 102 to a baseband signal, and outputs the baseband signal to demodulating section 104. Demodulating sections 104, provided for the same number of communication terminal apparatuses performing wireless communication, each carry out demodulating processing including despreading and RAKE combining on the received baseband signal, and output the demodulated signal to error correction decoding sections 105.

Error correction decoding sections 105, provided for the same number of communication terminal apparatuses performing radio transmission, each carry out error correction decoding on the demodulated signal, and obtain received data, which is the decoding result. Further, error correction decoding section 105 outputs the received data to ACK/NACK information detecting section 106, channel quality information detecting section 107, terminal rank detecting section 108, and other sections (not shown).

ACK/NACK information detecting section 106 detects the ACK information or NACK information included in the received data, and outputs the detection result to data retransmission control section 152. Channel quality information detecting section 107 detects channel quality information included in the received data, and outputs the detection result to scheduling section 151. Terminal rank detecting section 108 detects the terminal rank information included in the received data, and outputs the detection result to MCS table selecting section 109.

MCS table selecting section 109 selects the MCS table to be used in scheduling based on the rank of the communication terminal apparatus, and outputs information indicating the number of the selected MCS table, to scheduling section 151.

Scheduling section 151 stores a plurality of MCS tables showing the SINR ranges where each MCS level is assigned, determines the MCS level of each communication terminal apparatus based on the MCS table selected by MCS table selecting section 109 and channel quality information, compares the MCS levels of the communication terminal apparatuses, designates the communication terminal apparatus to be the destination of data transmission, and determines the modulation scheme, coding rate and physical resources for use for the data to be transmitted to the designated communication terminal apparatus (i.e. resource allocation). The MCS table selection method according to the present invention will be described in detail later.

After resource allocation, scheduling section 151 outputs information showing the communication terminal apparatus designated as the destination of data transmission, to data retransmission control section 152, and outputs resource allocation information indicating the resource allocation result, to error correction coding section 156. Scheduling section 151 reports the coding rate to error correction coding section 154 and specifies the modulation scheme to modulating section 155.

From the ACK/NACK information outputted from ACK/NACK information detecting section 106, data retransmission control section 152 selects the ACK/NACK information transmitted from the communication terminal apparatus designated as the destination of data transmission. Further, if the selected information is the ACK information, data retransmission control section 152 commands transmission data buffer section 153 to transmit new data to the communication terminal apparatus designated as the destination of data transmission. Further, if the selected information is the NACK information, data retransmission control section 152 commands transmission data buffer section 153 to transmit retransmission data to the communication terminal apparatus designated as the data transmission destination.

Transmission data buffer section 153 temporarily stores transmission data transmitted to each communication terminal apparatus and outputs the transmission data specified by data retransmission control section 152 to error correction coding section 154.

Error correction coding section 154 carries out error correction coding at the coding rate specified by scheduling section 151 on output data from transmission data buffer section 153, and outputs data after error correction coding to modulating section 155.

Modulating section 155 carries out modulation and spreading in accordance with the modulation scheme specified by scheduling section 151 on output data from error correction coding section 154, and outputs the modulated signal to radio transmitting section 158.

Error correction coding section 156 carries out error correction coding on the resource allocation information, and outputs data after error correction coding to modulating section 157. Modulating section 157 carries out modulation and spreading on output data from error correction coding section 156, and outputs the modulated signal to radio transmitting section 158.

Radio transmitting section 158 converts the output signal from modulating section 155 and the output signal from modulating section 157 to radio frequency signals, and outputs the radio frequency signals to duplexer 102.

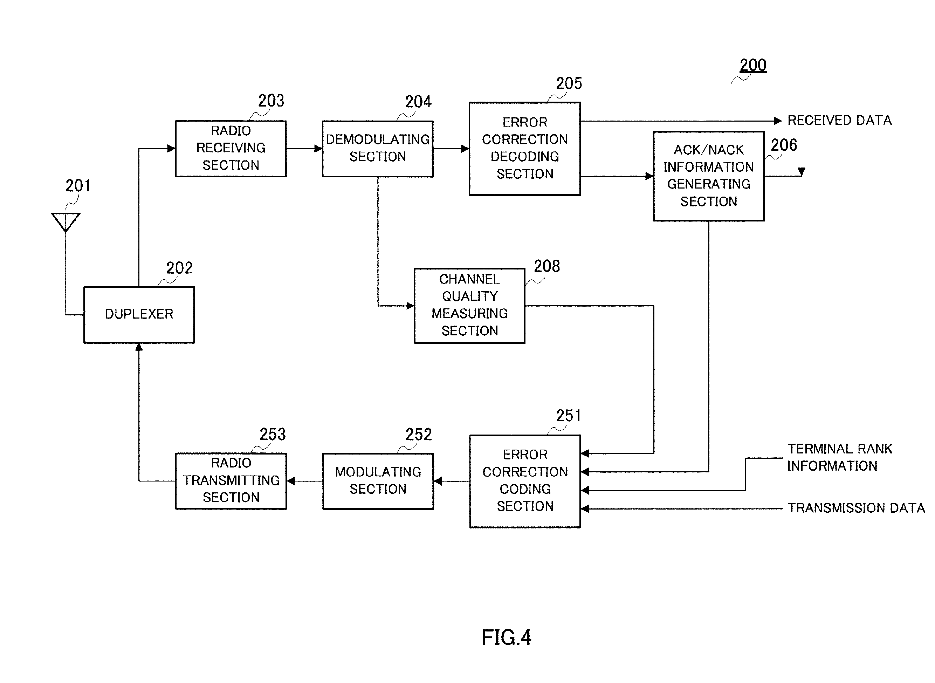

The configuration of the communication terminal apparatus according to the present embodiment will be described with reference to the block diagram of FIG.4. Communication terminal apparatus 200 of FIG.4 carries out wireless communication with base station apparatus 100 of FIG.3.

Duplexer 202 outputs the signal received at antenna 201 to radio receiving section 203. In addition, duplexer 202 carries out, from antenna 201, radio transmission of the signal outputted from radio transmitting section 253.

Radio receiving section 203 converts the received signal of a radio frequency outputted from duplexer 202 to a baseband signal, and outputs the baseband signal to demodulating section 204. Demodulating section 204 carries out demodulating processing including despreading and RAKE combining on the received baseband signal, and outputs the demodulated signal to error correction decoding section 205. Demodulating section 204 outputs information required for channel quality measurement such as desired signal power and interference signal power, obtained during demodulating processing, to channel quality measuring section 208.

Error correction decoding section 205 carries out error correction decoding processing and error detecting processing on the demodulated signal, and, when no error is detected, outputs received data, which is the demodulation result, to other sections (not shown). Further, error correction decoding section 205 outputs information indicating the error detection result to ACK/NACK signal generating section 206.

ACK/NACK signal generating section 206 generates ACK information if no error is detected in the demodulated signal, and generates NACK information if an error is detected in the demodulated signal, and outputs the ACK information or NACK information to error correction coding section 251.

Channel quality measuring section 208 measures the SINR (channel quality) based on information outputted from demodulating section 204, and outputs channel quality information indicating the measured SINR, to error correction coding section 251.

Error correction coding section 251 multiplexes channel quality information, ACK/NACK information and terminal rank information over the transmission data, carries out error correction coding on the multiplex signal, and outputs the multiplex signal to modulating section 252. These information may be subjected to error correction coding individually.

Modulating section 252 carries out modulation and spreading on the output signal from error correction coding section 251, and outputs the result to radio transmitting section 253. Radio transmitting section 253 converts the output signal from modulating section 252 to a radio frequency signal, and outputs the radio frequency signal to duplexer 202.

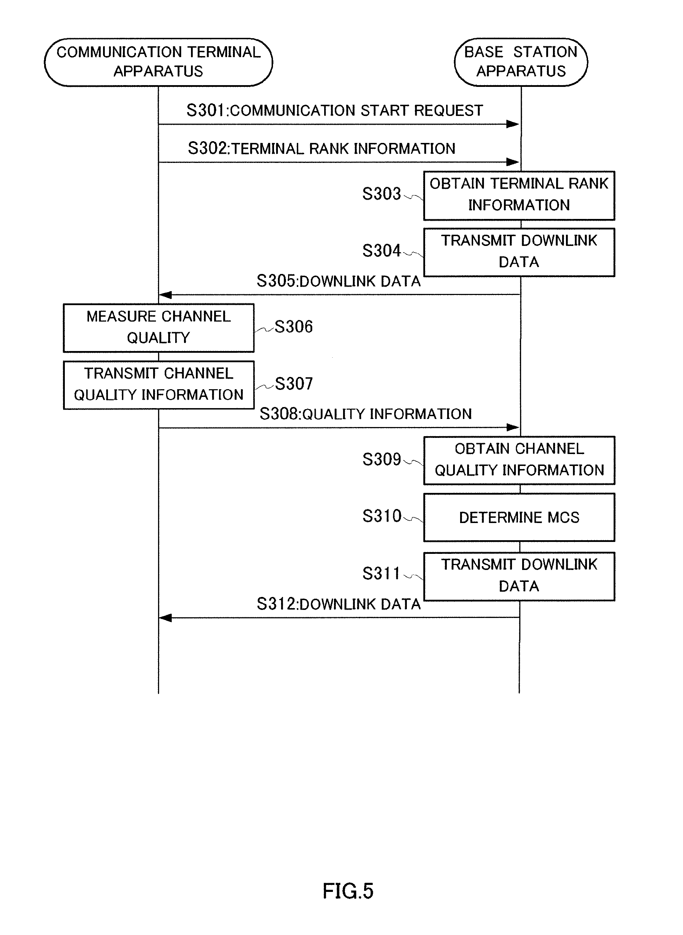

Steps of communication between the base station apparatus and the communication terminal apparatus according to the present embodiment will be described with reference to the sequence diagram of FIG.5.

First, the communication terminal apparatus issues a communication start request (S301) and transmits terminal rank information (S302 and S303) to the base station apparatus. Next, the base station apparatus transmits downlink data to the communication terminal apparatus that issued the communication start request (S304 and S305).

The communication terminal apparatus measures channel quality (S306), and transmits control information including channel quality information to the base station apparatus (S307, S308 and S309).

The base station apparatus carries out resource allocation by selecting an MCS table based on the terminal rank information, determining each MCS level based on channel quality information, comparing each MCS level, designating the communication terminal apparatus to be the destination of data transmission, and determining a modulation scheme and coding rate for transmission data transmitted to the designated communication terminal apparatus (S310). Further, the base station apparatus transmits downlink data representing the determined modulation scheme and coding rate, to the communication terminal apparatus (S311 and S312).

Next, a method of selecting an MCS table for the base station apparatus according to the present embodiment will be described in detail.

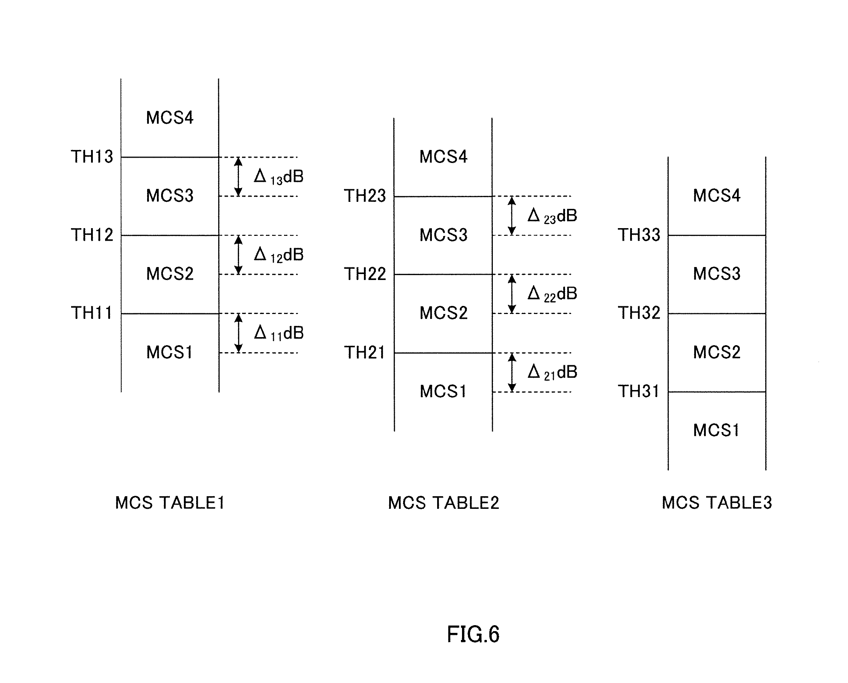

Scheduling section 151 stores a plurality of MCS tables as shown in FIG.6. The MCS tables indicate the SINR ranges where each MCS level is assigned, and these ranges are different from each other. For example, in MCS table 1, the SINR range where MCS 2 is assigned is equal to or greater than TH11 and less than TH12. In MCS table 2, the SINR range where MCS 2 is assigned is equal to or greater than TH22 and less than TH22, TH21 is Δ₁₁dB less than TH11 and TH22 is Δ₁₂dB less than TH12.

MCS table selecting section 109 selects an MCS table based on the terminal rank information. For example, a method of selecting an MCS table of a lower threshold value for a communication terminal apparatuses of a higher rank may be possible (that is, a method of allocating MCS table 3, 2 and 1 in descending order of rank A, B and C, respectively). When this selection method is used, the MCS level of a lower transmission rate is allocated to a communication terminal apparatus of a lower rank, so that it is possible to decrease error rate. On the other hand, a method of selecting an MCS table of a lower threshold for a communication terminal apparatus of a lower rank is alsopossible (that is, amethodof allocating MCS table 1, 2 and 3 in descending order of rank A, B and C, respectively) . When this selectionmethod is used, it is possible to allocate an appropriate MCS level to a communication terminal apparatus for which noise and interference power are measured greater than their true levels.

Scheduling section 151 determines, for each communication terminal apparatus, the MCS level corresponding to the SINR value indicated in channel quality information, using the MCS table selected by MCS table selecting section 109, and compares the MCS levels and designates the communication terminal apparatus to be the destination of data transmission.

In this way, according to the present embodiment, by selecting a table for determining the MCS level based on the rank of communication terminal apparatus, it is possible to determine the optimum MCS level and improve system throughput.

### (Embodiment 2)

In Embodiment 2, a case will be described where a rank is updated based on the variation of channel quality and a MCS table is reselected. The configuration of the communication terminal apparatus of the present embodiment is the same as communication terminal apparatus 200 of FIG.4 described in above Embodiment 1.

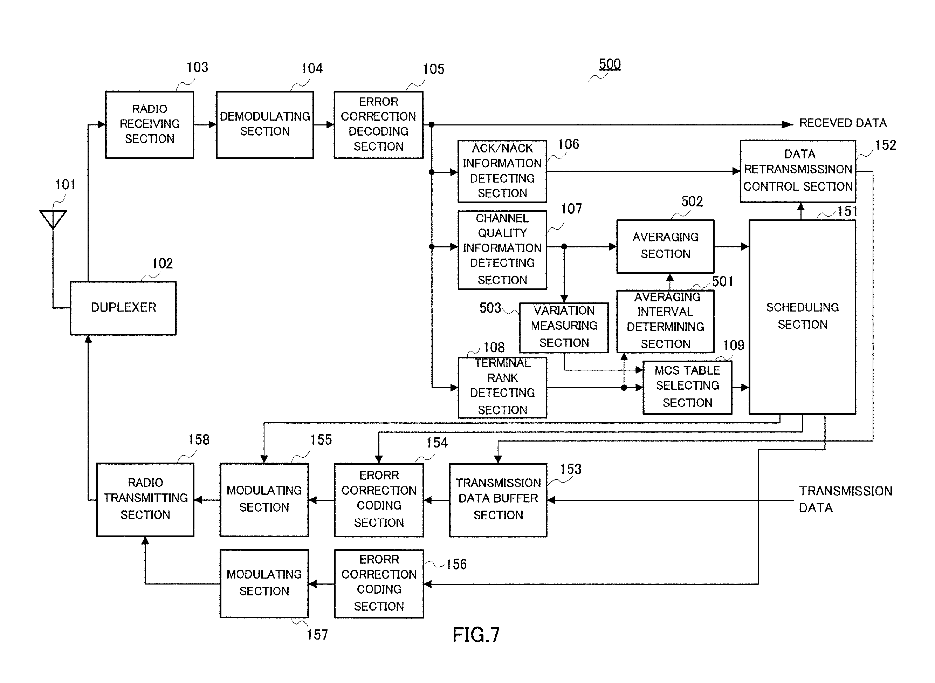

FIG. 7 is a block diagram showing the configuration of the base station apparatus according to the present embodiment. Further, in base station apparatus 500 of FIG.7, the same components as base station apparatus 100 shown in FIG.3 are allotted the same reference numerals and are not described. Compared to base station apparatus 100 shown in FIG.3, base station apparatus 500 of FIG.7 employs a configuration adding averaging interval determining section 501, averaging section 502 and variation measuring section 503.

Channel quality information detecting section 107 detects channel quality information included in received data, and outputs the detection result to averaging section 502 and variation measuring section 503. Terminal rank detecting section 108 detects terminal rank information included in received data, and outputs the detection result to MCS table selecting section 109 and averaging interval determining section 501.

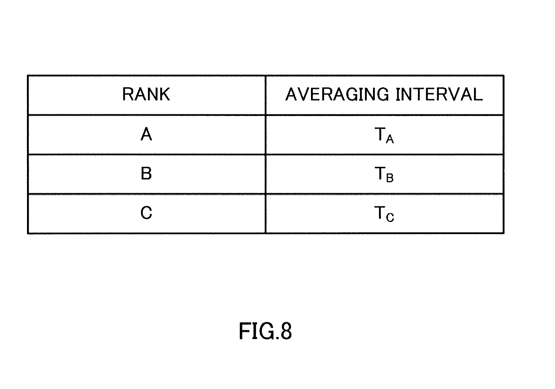

Averaging interval determining section 501 stores a table providing the relationship between ranks of communication terminal apparatuses and averaging intervals of channel quality, and, based on these ranks, sets an averaging interval such that the averaging intervals are made longer for the lower rank. For example, in FIG. 8, averaging interval determining section 501 sets averaging interval T_{A}, T_{B} and T_{C} (T_{A}<T_{B}<T_{c}) in descending order of rank A, B and C. Then, averaging interval determining section 501 outputs information indicating the set averaging interval to averaging section 502.

Averaging section 502 averages channel quality based on the averaging interval set by averaging interval determining section 501, and outputs the average value of channel quality to scheduling section 151.

Variation measuring section 503 calculates the variation of channel quality in the predetermined measured interval, and outputs the calculation result to MCS table selecting section 109. The averaging interval of channel quality and the interval for measuring the variation may not be the same.

MCS table selecting section 109 selects an MCS table used in scheduling based on a rank of a communication terminal apparatus, and outputs information indicating the number of the selected MCS table to scheduling section 151. Further, MCS table selecting section 109 updates the rank based on the variation of channel quality, and reselects an MCS table.

For example, when the variation is greater than threshold value 1, it is determined that the variation of channel quality is close to the normal variation and the reliability of the averaging result is high, so that an MCS table is reselected by raising the rank. In contrast, when the variation is equal to or less than threshold value 2, it is determined that the variation of channel quality is biased and the reliability of the averaging result is low and an MCS table is reselected by lowering the rank. Threshold value 1 and threshold value 2 may be the same value.

Scheduling section 151 determines the MCS level in accordance with the MCS table selected by MCS table selecting section 109 and averaged reception quality information.

In this way, according to the present embodiment, it is possible to decrease the variation of reception quality information by carrying out averaging, and reselect an MCS table by updating a rank taking into consideration the reliability of channel quality based on the variation of channel quality, so that it is possible to select the optimum MCS level and improve system throughput.

### (Embodiment 3)

In Embodiment 3, a case will be described where an MCS table is reselected based on the relationship between the amount of received data and capacity of turbo decoding processing.

When the base station apparatus assigns a higher MCS level to a communication terminal apparatus as the destination of a data transmission the amount of transmission data becomes large and the number of turbo coding blocks (packets) becomes larger. If the communication terminal apparatus has low processing performance, in a case where the number of turbo coding blocks becomes larger than the predetermined amount per time unit, it is likely to fail carrying out turbo decoding of the number of iterative decoding. In a case where the communication terminal apparatus is designed to carry out maximum iterative decoding on the maximum amount of received data per time unit, the circuit size becomes redundant.

In the present embodiment, when the amount of received data exceeds the predetermined ratio (for example, 80 percent) of capacity of turbo decoding processing, the communication terminal apparatus reports alarm information to the base station apparatus. Upon receiving the alarm information, the base station apparatus lowers the MCS level by selecting an MCS table of a higher threshold value.

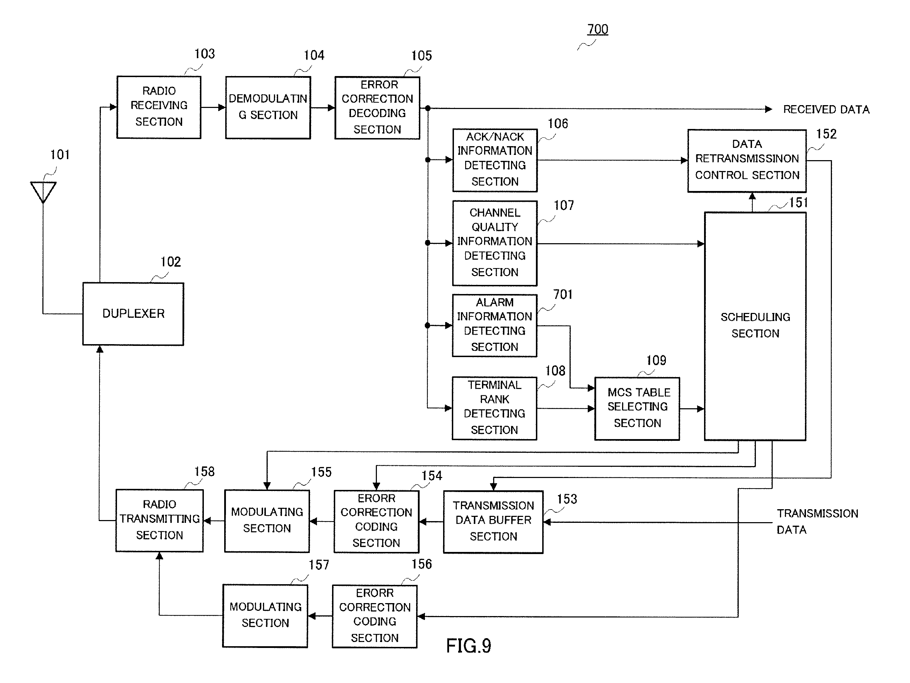

FIG.9 is a block diagram showing a configuration of the base station apparatus according to the present embodiment. Further, in base station apparatus 700 of FIG.9, the same components as base station apparatus 100 shown in FIG.3 are allotted the same reference numerals and are not described. Compared to base station apparatus 100 of FIG.3, base station apparatus 700 of FIG.9 employs a configuration adding alarm information detecting section 701.

Error correction decoding section 105 outputs received data to ACK/NACK information detecting section 106, channel quality information detecting section 107, terminal rank detecting section 108, alarm information detecting section 701 and other sections (not shown).

Alarm information detecting section 701 detects the alarm information included in the received data, and outputs the detection result to table selecting section 109.

MCS table selecting section 109 selects the MCS table used in scheduling based on the rank of the communication terminal apparatus, and outputs information indicating the number of the selected MCS table to scheduling section 151. When alarm information detecting section 109 detects the alarm information, MCS table selecting section 109 reselects an MCS table of a higher threshold value.

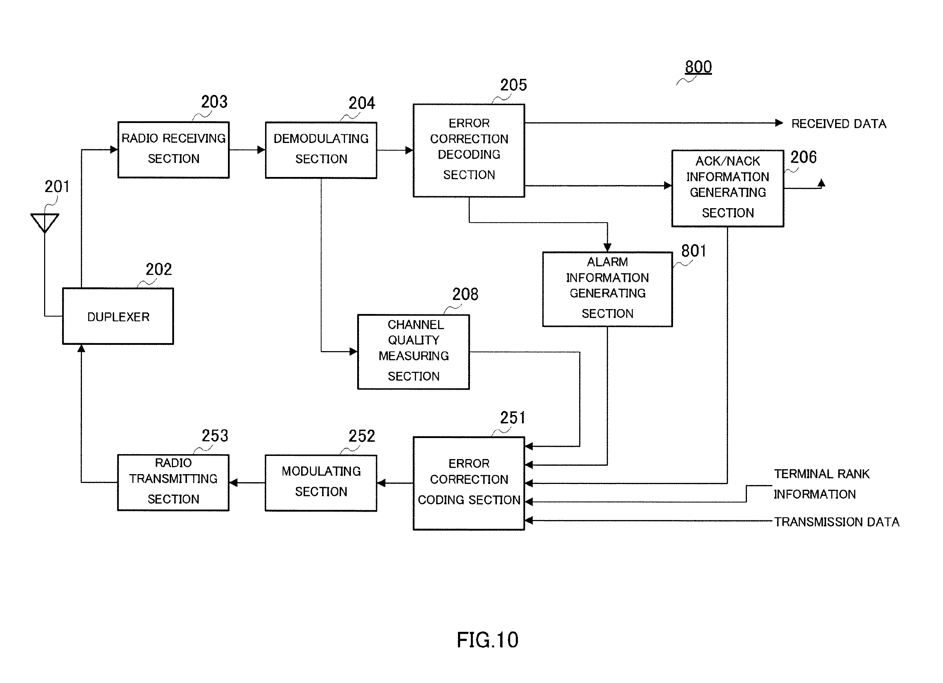

FIG.10 is a block diagram showing a configuration of a communication terminal apparatus according to the presentembodiment. In communication terminal apparatus 800 of FIG.10, the same components as communication terminal apparatus 200 of FIG.4 are allotted the same reference numerals and are not described. Compared to communication terminal apparatus 200 shown in FIG.4, communication terminal apparatus 800 of FIG.10 employs a configuration adding alarm information generating section 801.

Error correction decoding section 205 outputs information indicating the error detection result to ACK/NACK signal generating section 206, and outputs information indicating the amount of received data and capacity of turbo decoding processing to alarm information generating section 801.

When the amount of received data and capacity of turbo decoding processing exceeds the predetermined ratio of the communication terminal apparatus, alarm information generating section 801 generates alarm information and outputs the alarm information to error correction coding section 251.

Error correction coding section 251 multiplexes channel quality information, ACK/NACK information, alarm information and terminal rank information with transmission data, carries out error correction coding on the multiplex signal and outputs the result to modulating section 252.

In this way, according to the present embodiment, when the amount of received data exceeds the predetermined ratio of capacity of turbo decoding processing of the communication terminal apparatus, it is possible to lower the MCS level by selecting an MCS table of a higher threshold value, so that it is possible to determine the optimum MCS level and improve system through put. Further it eliminates the necessity to provide processing performance capable of the maximum number of iterations for the maximum amount of received packet, so that it is possible to freely design the communication terminal apparatus.

Although a case has been described above with the present embodiment where anMCS table of a higher threshold value is reselected in case of alarm information detection, the present invention is not limited to this, and the MCS level may be directly lowered when the alarm information is detected.

Moreover, processing capacity alarm information (1) may be transmitted only when the amount of data exceeds processing capacity or (2) may constantly be transmitted and indicate whether or not there is an alarm or not.

### (Embodiment 4)

In Embodiment 4, a case will be described where an MCS table is reselected based on the frequency constancy of a communication terminal apparatus.

When AFC (Auto Frequency Control) is carried out during communication, the frequency is shifted due to the influence of, for example, temperature characteristics of a crystal oscillator. In this case, it takes a certain period of time until AFC compensates for the frequency offset again and makes the frequency constant. That is, until the frequency becomes constant, the communication terminal apparatus cannot correctly detect the location of the received path, and as a result, the reliability of channel quality measurement is deteriorated.

In the present embodiment, a communication terminal apparatus measures the frequency constancy when necessary, reports frequency constancy information indicating the measurement result to the base station apparatus, and adaptively reselects an MCS table in accordance with the frequency constancy of the communication terminal apparatus.

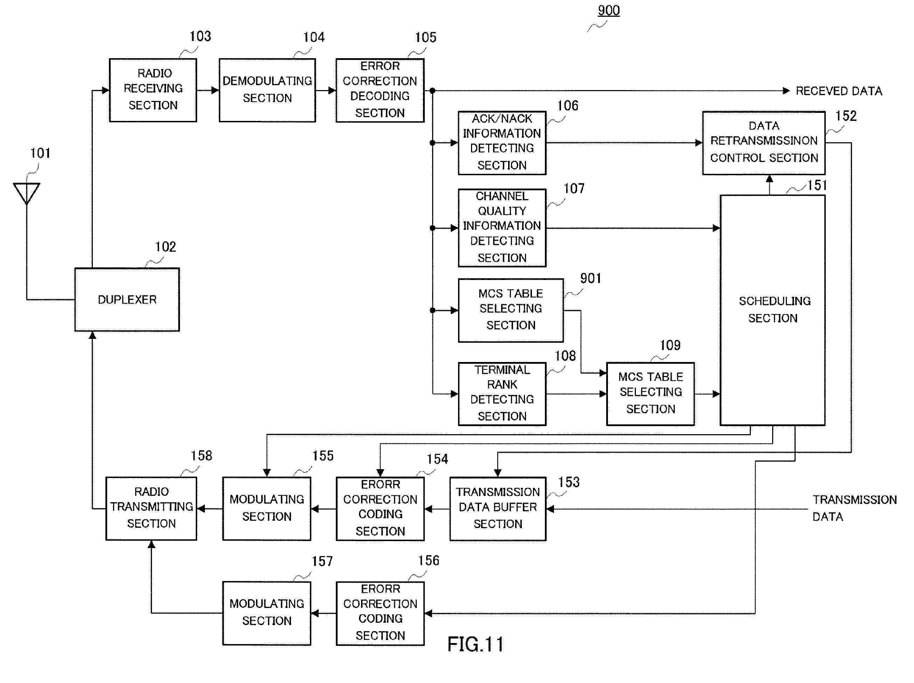

FIG.11 is a block diagram showing a configuration of the base station apparatus according to the present embodiment. In base station apparatus 900 of FIG.11, the same components of base station apparatus 100 shown in FIG.3 are allotted the same reference numerals and are not described. Compared to base station apparatus 100 shown in FIG.3, base station apparatus 900 of FIG.11 employs a configuration adding frequency constancy information detecting section 901.

Error correction decoding section 105 outputs the received data to ACK/NACK information detecting section 106, channel quality information detecting section 107, terminal rank detecting section 108, frequency constancy information detecting section 901 and other sections (not shown).

Frequency constancy information detecting section 901 detects frequency constancy information included in the received data, and outputs the detection result to MCS table selecting section 109.

MCS table selecting section 109 selects the MCS table used in scheduling based on the rank of a communication terminal apparatus, and outputs information indicating the number of the selected MCS table to scheduling section 151. MCS table selecting section 109 reselects an MCS table in accordance with the frequency constancy of the communication terminal apparatus.

For example, it is possible to determine that AFC control is regularly functioning when the frequency constancy is greater than threshold value 1, so that the MCS table is reselected by raising a rank. In contrast, it is possible to determine that AFC control is not regularly functioning when the frequency constancy is equal to or less than threshold value 2, and the MCS table is reselected by lowering a rank. Further, threshold value 1 and threshold value 2 may be the same value.

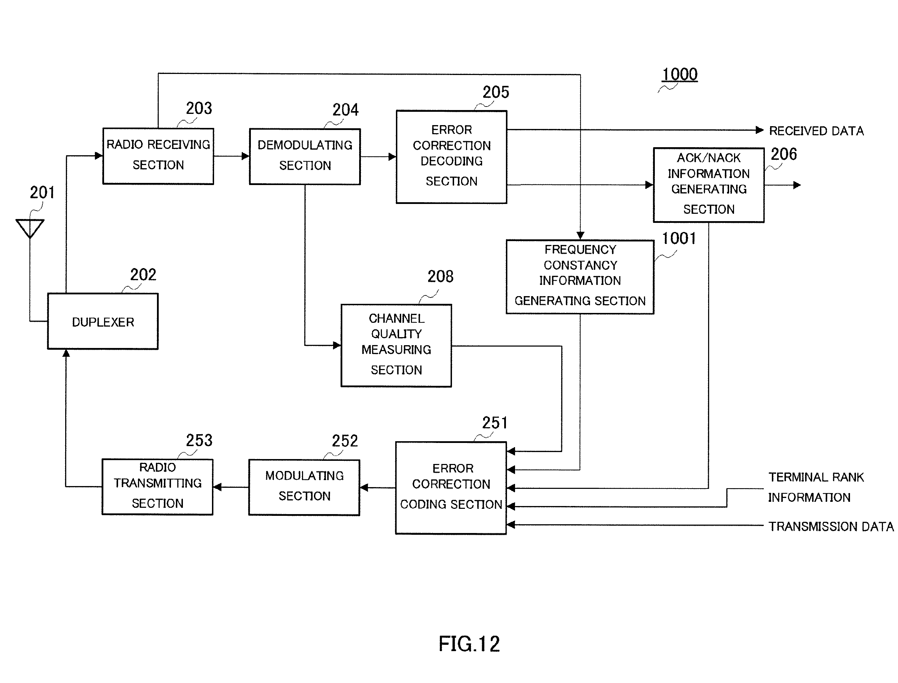

FIG.12 is a block diagram showing a configuration of the communication terminal apparatus according to the present embodiment. In communication terminal apparatus 1000 of FIG.12, the same components as communication terminal apparatus 200 shown in FIG.4 are allotted the same reference numerals and are not described. Compared to communication terminal apparatus 200 shown in FIG.4, communication terminal apparatus 1000 of FIG.12 employs a configuration adding frequency constancy information generating section 1001.

When converting a received signal of a radio frequency to a baseband signal, radio receiving section 203 carries out AFC control, measures the frequency shift and outputs the measurement result to frequency constancy information generating section 1001.

Frequency constancy information generating section 1001 measures the frequency constancy based on the frequency shift, generates frequency constancy information indicating the measurement result and outputs the generated information to error correction coding section 251.

Error correction coding section 251 multiplexes channel quality information, ACK/NACK information, frequency constancy information and terminal rank information over transmission data, carries out error correction coding on the multiplex signal and outputs the result to modulating section 252.

In this way, according to the present embodiment, it is possible to reselect an MCS table taking the frequency constancy into consideration and lower the MCS level by selecting an MCS table of a higher threshold value for the communication terminal apparatus that requires some time until the frequency becomes constant, so that it is possible to determine the optimum MCS level and improve system throughput.

### (Embodiment 5)

In Embodiment 5, a case will be described here where, when the maximum number of iterations of turbo code is used as the rank of a communication terminal apparatus, the combinations of the M-ary modulation number and coding rate are different from each other. In the present embodiment, a configuration of the base station apparatus is the same as FIG.3 and a configuration of the communication terminal apparatus is the same as FIG.4. The communication terminal apparatus transmits information indicating the maximum number of iterations of turbo code as a terminal rank to the base station apparatus.

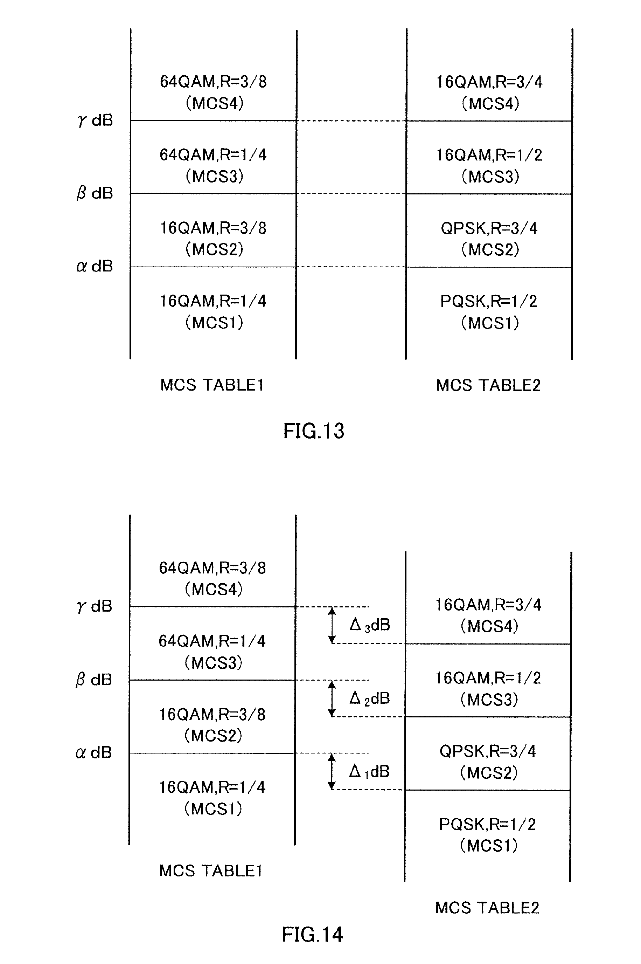

The base station apparatus according to the present embodiment stores the MCS tables shown in FIG. 13. MCS table 1 and MCS table 2 of FIG.13 have different combinations of the M-ary modulation number and coding rate, and transmission rate of the respective MCS levels are the same.

The base station appratus uses MCS table 1 of lower coding rates and higher M-ary modulation for the communication terimnal apparatus of a higher performance rank (for example, rank A) based on the number of turbo iterative decoding, and uses MCS table 2 for the communicatino terimnal apparatus of a lower performance rank (for example, rank B and C).

In this way, in the communication terminal apparatus having a larger maximum number of iterations, it is possible to improve performance by raising redundancy of coding by using an MCS table of a low coding rate. At this time, by raising the M-ary modulation number, transmission rate is prevented from deteriorating.

Further, as shown in FIG.14, when MCS tables where the combinations of the M-ary modulation number and coding rate are different from each other are used, threshold values between MCS levels may be offset.

Moreover, although cases of resource allocation in the downlink have been described with the above embodiments, the present invention is not limited to this and can be applied to resource allocation of the uplink channel.

The present application is based on Japanese Patent Application No.2005-026738, filed on February 2, 2005, the entire content of which is expressly incorporated by reference herein.

### Industrial Applicability

The present invention is suitable for use for the base station apparatus carrying out scheduling.

## Claims

1. A base station apparatus comprising:
a modulation and coding scheme table selecting section that selects a modulation and coding scheme table used in scheduling based on a rank of a communication terminal apparatus; and
a scheduling section that determines a modulation and coding scheme level based on the modulation and coding scheme table selected by the modulation and coding scheme table selecting section and channel quality measured by the communication terminal apparatus.

2. The base station apparatus according to claim 1, further comprising a variation measuring section that calculates a variation of the channel quality in a predetermined measurement interval,
wherein the modulation and coding scheme table selecting section updates the rank based on the variation of the channel quality and reselects a modulation and coding scheme table.

3. The base station apparatus according to claim 1, further comprising an alarm information detecting section that detects alarm information indicating that the amount of received data at the communication terminal apparatus exceeds a predetermined ratio of turbo decoding processing capacity in the communication terminal apparatus,
wherein, when the alarm information detecting section detects the alarm information, the modulation and coding scheme table selecting section reselects a modulation and coding scheme table of a higher threshold value.

4. The base station apparatus according to claim 1, further comprising a frequency constancy information detecting section that detects frequency constancy information indicating frequency constancy in the communication terminal apparatus,
wherein the modulation and coding scheme table selecting section reselects a modulation and coding scheme table in accordance with the frequency constancy of the communication terminal apparatus.

5. The base station apparatus according to claim 1, wherein:
the rank is a maximum number of iterations for turbo code; and
a modulation and coding scheme table selecting section selects a modulation and coding scheme table of a lower coding rate for a communication terminal apparatus having a larger maximum number of iterations.

6. A resource allocation method comprising the steps of:
selecting a modulation and coding scheme table used in scheduling based on a rank of a communication terminal apparatus;
updating the rank and reselecting a modulation and coding scheme table; and
determining a modulation and coding scheme level based on the reselected modulation and coding scheme table and channel quality measured by the communication terminal apparatus.
